(19) Europäisches Patentamt
European Patent Office
Office européen des brevets

(11) **EP 2 617 954 B1**

(12) **EUROPÄISCHE PATENTSCHRIFT**

(45) Veröffentlichungstag und Bekanntmachung des Hinweises auf die Patenterteilung:
**27.04.2016 Patentblatt 2016/17**

(51) Int Cl.:
*F01L 1/352* *(2006.01)*      *F16D 3/10* *(2006.01)*
*F16H 35/00* *(2006.01)*      *F16H 3/56* *(2006.01)*

(21) Anmeldenummer: **12198734.1**

(22) Anmeldetag: **20.12.2012**

(54) **Koppeleinrichtung zur Herstellung einer Wirkverbindung zwischen einer Nockenwelle und einer Kurbelwelle einer Brennkraftmaschine, Verfahren zum Betreiben der Koppeleinrichtung sowie Ventiltrieb einer Brennkraftmaschine**

Coupling device for producing an effective connection between a camshaft and a crankshaft of an internal combustion engine, method for operating the coupling device and valve drive of a combustion engine

Dispositif de couplage destiné à la fabrication d'une liaison active entre un arbre à came et un arbre à manivelle d'un moteur à combustion interne, procédé de fonctionnement du dispositif de couplage ainsi que commande de soupape d'un moteur à combustion interne

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **29.12.2011 DE 102011090091**

(43) Veröffentlichungstag der Anmeldung:
**24.07.2013 Patentblatt 2013/30**

(73) Patentinhaber: **ROBERT BOSCH GMBH**
**70442 Stuttgart (DE)**

(72) Erfinder: **Durix, Lucas**
**67410 Drusenheim (FR)**

(56) Entgegenhaltungen:
EP-A1- 0 396 280      EP-A1- 2 025 883
DE-A1- 3 638 527      DE-A1- 19 801 679
DE-A1-102005 053 119      DE-C- 882 165
FR-A1- 2 665 483

**Beschreibung**

Die Erfindung betrifft eine Koppeleinrichtung zur Herstellung einer Wirkverbindung zwischen einer Nockenwelle einer Brennkraftmaschine und einer Kurbelwelle der Brennkraftmaschine und zur Verstellung der Phasenlage der Nockenwelle gegenüber der Phasenlage der Kurbelwelle, wobei die Koppeleinrichtung über eine von der Kurbelwelle antreibbare erste Eingangswelle, eine von einem elektrischen Stellantrieb antreibbare zweite Eingangswelle und eine mit der Nockenwelle wirkverbundene Ausgangswelle verfügt. Die Erfindung betrifft weiterhin ein Verfahren zum Betreiben einer Koppeleinrichtung sowie einen Ventiltrieb einer Brennkraftmaschine.

Stand der Technik

Die Koppeleinrichtung der eingangs genannten Art ist aus dem Stand der Technik bekannt. Sie ist der Brennkraftmaschine zugeordnet, welche über zumindest eine Kurbelwelle und wenigstens eine Nockenwelle verfügt. Die Kurbelwelle dient dazu, die oszillierend lineare Bewegung wenigstens eines Kolbens der Brennkraftmaschine, insbesondere mit Hilfe einer Pleuelstange, in eine Drehbewegung umzusetzen. Die Nockenwelle dient der Ansteuerung wenigstens eines Ventils der Brennkraftmaschine. Sie ist insoweit Bestandteil eines Ventiltriebs. Die Nockenwelle wird von der Kurbelwelle angetrieben. Zu diesem Zweck ist die Koppeleinrichtung vorgesehen, über welche die Wirkverbindung zwischen Kurbelwelle und Nockenwelle hergestellt ist. Die Kurbelwelle treibt also die Nockenwelle über die Koppeleinrichtung an. Dabei liegt zwischen der Drehzahl der Kurbelwelle und der Drehzahl der Nockenwelle ein bestimmtes Drehzahlverhältnis vor. Bei einer Viertakt-Brennkraftmaschine ist die Drehzahl der Kurbelwelle üblicherweise doppelt so groß wie die Drehzahl der Nockenwelle. Es sind jedoch auch andere Drehzahlverhältnisse realisierbar. Weiter weist die erste Eingangswelle einen Lagerkäfig zur drehbeweglichen Lagerung des Drehmomentübertragungselements auf. Um eine zuverlässige beidseitige Lagerung des Drehmomentübertragungselements zu gewährleisten, ist der Lagerkäfig vorgesehen. Diese erstreckt sich vorzugsweise in axialer Richtung. Beispielsweise setzt sich die erste Eingangswelle aus einem Grundkörper und dem Lagerkäfig zusammen, wobei der Grundkörper auf der zweiten Eingangswelle oder der Ausgangswelle und der Lagerkäfig auf der jeweils anderen Welle drehbeweglich gelagert ist. Insbesondere sind das Eingangsdrehmomentübertragungsrad und das Ausgangsdrehmomentübertragungsrad ebenso wie das Drehmomentübertragungselement in dem Lagerkäfig angeordnet, sodass der Lagerkäfig gleichzeitig einen Schutz vor Verschmutzung und dergleichen bietet.

Die Koppeleinrichtung dient nun neben dem reinen Herstellen der Wirkverbindung auch dazu, die Phasenlage der Nockenwelle gegenüber der Phasenlage der Kurbelwelle zu verstellen. Die Koppeleinrichtung ist insoweit auch als Phasenlagenverstelleinrichtung ausgebildet und ist Bestandteil einer Nockenwellenverstellung. Durch die Verstellung der Phasenlage der Nockenwelle können die Steuerzeiten des Ventils beziehungsweise der Ventile während des Betriebs der Brennkraftmaschine verändert werden. Üblicherweise wird durch die Verstellung der Phasenlage der Nockenwelle ein früheres oder späteres Öffnen des Ventils erzielt, wobei der Öffnungszeitraum, über welchen das Ventil geöffnet ist, unverändert bleibt.

Weil über die Koppeleinrichtung die Wirkverbindung zwischen der Kurbelwelle und der Nockenwelle hergestellt wird, weist sie eine erste Eingangswelle auf, welche von der Kurbelwelle antreibbar ist beziehungsweise angetrieben wird. Zur Verstellung der Phasenlage ist der Stellantrieb vorgesehen, mittels welchem die zweite Eingangswelle der Koppeleinrichtung antreibbar ist beziehungsweise angetrieben wird. Schließlich verfügt die Koppeleinrichtung über die Ausgangswelle, welche mit der Nockenwelle wirkverbindbar beziehungsweise wirkverbunden ist.

Der Stellantrieb der Koppeleinrichtung kann beispielsweise elektrisch sein, also zum Beispiel als Elektromotor, insbesondere als Gleichstrommotor, vorliegen. Die bekannte Koppeleinrichtung weist jedoch den Nachteil auf, dass bei dem Betreiben der Brennkraftmaschine beziehungsweise der Koppeleinrichtung der Stellantrieb permanent eine von Null verschiedene Drehzahl aufweisen muss, also auch, wenn die Phasenlage der Nockenwelle nicht verstellt werden soll. Beispielsweise muss der Stellantrieb beziehungsweise die mit diesem verbundene zweite Eingangswelle eine Drehzahl aufweisen, welche der halben Drehzahl der ersten Eingangswelle beziehungsweise der Kurbelwelle entspricht. Zur Verstellung der Phasenlage der Nockenwelle gegenüber der Phasenlage der Kurbelwelle wird nun die Drehzahl des Stellantriebs vergrößert oder verringert. Das bedeutet jedoch, dass der Stellantrieb eine vergleichsweise hohe Leistung aufweisen muss und zudem einem hohen Verschleiß unterworfen ist.

Die EP 0 396 280 A1 beschreibt eine Vorrichtung gemäß des Oberbegriffs des Anspruchs 1.

Die DE 10 2005 053119 A1 offenbart eine Eingangswelle mit einem Lagekäfig in dem ein Getriebe eingeschlossen ist.

Offenbarung der Erfindung

Demgegenüber weist die Koppeleinrichtung mit den in Anspruch 1 genannten Merkmalen den Vorteil auf, dass der Stellantrieb nur zur Verstellung der Phasenlage der Nockenwelle betrieben werden muss. Dies wird erfindungsgemäß erreicht, indem die zweite Eingangswelle und die Ausgangswelle über wenigstens ein an der ersten Eingangswelle exzentrisch und drehbeweglich gelagertes Drehmomentübertragungselement miteinander gekoppelt sind. Das Drehmomentübertragungselement ist somit sowohl mit der ersten Eingangswelle und der zweiten Eingangswelle als auch der Ausgangswelle wirkverbunden. Es liegt an der ersten Eingangswelle vor und ist an dieser drehbeweglich gelagert, wobei die Lagerung exzentrisch vorgesehen ist. Entsprechend ist die Drehachse des Drehmomentübertragungselements verschieden von der Drehachse der ersten Eingangswelle selbst. Beispielsweise sind die beiden Drehachsen parallel zueinander angeordnet.

Bei einer Rotation der ersten Eingangswelle rotiert das Drehmomentübertragungselement mit um die Drehachse der ersten Eingangswelle.

Gleichzeitig kann es jedoch eine Rotationsbewegung um seine eigene Drehachse beschreiben. Das Drehmomentübertragungselement ist nun derart angeordnet, das es mit der zweiten Eingangswelle und der Ausgangswelle drehmomentübertragend zusammenwirkt. Dabei sind die zweite Eingangswelle und die Ausgangswelle ausschließlich über das Drehmomentübertragungselement miteinander wirkverbunden. Sie sind also nur über das drehbeweglich gelagerte Drehmomentübertragungselement miteinander gekoppelt. Gleichzeitig lässt die Lagerung des Drehmomentübertragungselements an der ersten Eingangswelle ausschließlich eine Drehbewegung des Drehmomentübertragungselements um dessen Drehachse zu.

Bei stillstehendem Stellantrieb und damit stillstehender zweiter Eingangswelle kann durch Rotation der ersten Eingangswelle Drehmoment über das Drehmomentübertragungselement auf die Ausgangswelle übertragen werden. Wird zusätzlich oder alternativ die erste Eingangswelle mittels des elektrischen Stellantriebs angetrieben, so kann auch das an der zweiten Eingangswelle anliegende Drehmoment über das Drehmomentübertragungselement auf die Ausgangswelle übertragen werden. Bei gleichzeitiger Drehbewegung der ersten Eingangswelle und der zweiten Eingangswelle überlagern sich die beiden Drehbewegungen. Auf diese Weise wird zum einen die Wirkverbindung zwischen der Kurbelwelle und der Nockenwelle über die erste Eingangswelle, das Drehmomentübertragungselement und die Ausgangswelle hergestellt und zum anderen die Verstellung der Phasenlage mittels des elektrischen Stellantriebs über die zweite Eingangswelle, das Drehmomentübertragungselement und die Ausgangswelle realisiert. Dabei muss der Stellantrieb nur dann betrieben werden, wenn tatsächlich eine Verstellung der Phasenlage der Nockenwelle vorgenommen werden soll.

Eine Weiterbildung der Erfindung sieht vor, dass die erste Eingangswelle, die zweite Eingangswelle und die Ausgangswelle koaxial zueinander angeordnet sind. Die drei Wellen der Koppeleinrichtung weisen demnach dieselbe Drehachse auf. Anders ausgedrückt fallen die Drehachsen der drei Wellen zusammen. Entsprechend ist das Drehmomentübertragungselement zu der gemeinsamen Drehachse von erster Eingangswelle, zweiter Eingangswelle und Ausgangswelle exzentrisch gelagert, wobei seine Drehachse nicht mit der gemeinsamen Drehachse zusammenfällt, sondern insbesondere parallel mit einem bestimmten Abstand zu dieser verläuft.

Beispielsweise ist es vorgesehen, dass die zweite Eingangswelle und die Ausgangswelle in Richtung der gemeinsamen Drehachse voneinander beabstandet angeordnet sind, ihre dem jeweils anderen Element zugewandten Stirnflächen also voneinander beabstandet sind, sodass keine unmittelbare Wirkverbindung zwischen der zweiten Eingangswelle und der Ausgangswelle vorliegt. Die erste Eingangswelle ist beispielsweise konzentrisch zu der zweiten Eingangswelle und/oder der Ausgangswelle angeordnet. Beispielsweise ist die erste Eingangswelle auf der zweiten Eingangswelle, der Ausgangswelle oder beiden gelagert, umgreift die jeweils andere Welle also zumindest bereichsweise.

Eine Weiterbildung der Erfindung sieht vor, dass die zweite Eingangswelle ein Eingangsdrehmomentübertragungsrad mit einem ersten Durchmesser und die Ausgangswelle ein Ausgangsdrehmomentübertragungsrad mit einem zweiten Durchmesser aufweist, wobei das Eingangsdrehmomentübertragungsrad und das Ausgangsdrehmomentübertragungsrad über das als Koppelrad ausgebildete Drehmomentübertragungselement miteinander wirkverbunden sind. Das Eingangsdrehmomentübertragungsrad ist also auf der zweiten Eingangswelle angeordnet und drehfest mit dieser verbunden oder von der zweiten Eingangswelle ausgebildet. Entsprechendes gilt für das Ausgangsdrehmomentübertragungsrad im Hinblick auf die Ausgangswelle. Das Eingangsdrehmomentübertragungsrad weist den ersten Durchmesser und das Ausgangsdrehmomentübertragungsrad den zweiten Durchmesser auf. Der zweite Durchmesser kann dem ersten Durchmesser entsprechen. Vorzugsweise sind die beiden Durchmesser jedoch voneinander verschieden, insbesondere ist der zweite Durchmesser größer als der erste Durchmesser. Das Drehmomentübertragungselement soll nun ebenfalls als Rad ausgebildet sein und mithin als Koppelrad vorliegen. Über dieses sind das Eingangsdrehmomentübertragungsrad und das Ausgangsdrehmomentübertragungsrad drehmomentübertragend verbunden.

Eine Weiterbildung der Erfindung sieht vor, dass das Eingangsdrehmomentübertragungsrad, das Ausgangsdrehmomentübertragungsrad und das Koppelrad als Zahnräder ausgebildet sind. Prinzipiell können die genannten Räder beliebig ausgestaltet sein. Um eine zuverlässige Wirkverbindung zwischen ihnen auszubilden, ist jedoch eine formschlüssige Verbindung vorgesehen. Entsprechend liegen sie als Zahnräder vor, welche jeweils über eine Außenverzahnung verfügen, wobei die Außenverzahnungen des Eingangsdrehmomentübertragungsrads und des Ausgangsdrehmomentübertragungsrads mit der Außenverzahnung beziehungsweise den Außenverzahnungen des Koppelrads zusammenwirken, also miteinander im Eingriff stehen.

Eine Weiterbildung der Erfindung sieht vor, dass das Koppelrad einen ersten, mit dem Eingangsdrehmomentübertragungsrad wirkverbundenen Bereich mit einem ersten Komplementärdurchmesser, und einen zweiten, mit dem Ausgangsdrehmomentübertragungsrad wirkverbundenen Bereich mit einem zweiten Komplementärdurchmesser aufweist. Das Koppelrad ist also in zwei Bereiche aufgeteilt, wobei der erste Bereich mit dem Eingangsdrehmomentübertragungsrad und der zweite Bereich mit dem Ausgangsdrehmomentübertragungsrad zusammenwirkt. Beispielsweise stehen die jeweils vorgesehenen Verzahnungen miteinander im Eingriff. Um das Zusammenwirken der Bereiche mit den Drehmomentübertragungsrädern zu gewährleisten, weist der erste Bereich den ersten Komplementärdurchmesser und der zweite Bereich den zweiten Komplementärdurchmesser auf. Dabei sind der erste Komplementärdurchmesser auf den ersten Durchmesser und der zweite Komplementärdurchmesser auf den zweiten Durchmesser abgestimmt. Insbesondere ergibt die Summe aus dem ersten Durchmesser und dem ersten Komplementärdurchmesser den gleichen Wert wie die Summe aus dem zweiten Durchmesser und dem zweiten Komplementärdurchmesser.

Eine Weiterbildung der Erfindung sieht vor, dass das Drehmomentübertragungselement eine zu den Drehachsen der ersten Eingangswelle, der zweiten Eingangswelle und der Ausgangswelle parallele Drehachse aufweist. Auf diese Ausführungsform wurde bereits vorstehend eingegangen. Besonders bevorzugt fallen die Drehachsen der ersten Eingangswelle, der zweiten Eingangswelle und der Ausgangswelle in einer gemeinsamen Drehachse zusammen, während die Drehachse des Drehmomentübertragungselements zu dieser gemeinsamen Drehachse beabstandet parallel vorliegt.

Eine Weiterbildung der Erfindung sieht vor, dass der Stellantrieb mit der zweiten Eingangswelle über ein, insbesondere selbsthemmendes Getriebe wirkverbunden ist. Mit Hilfe des Getriebes wird eine Drehmomentübersetzung zwischen dem Stellantrieb und der zweiten Eingangswelle erreicht. Beispielsweise ist es vorgesehen, dass der Stellantrieb lediglich ein geringes Drehmoment bereitstellt, welches durch Drehzahlreduktion vergrößert auf die zweite Eingangswelle übertragen wird. Entsprechend wird auf diese Weise zumindest teilweise vermieden, dass der Stellantrieb durch die Drehbewegung der ersten Eingangswelle ebenfalls in Drehbewegung versetzt wird. Besonders bevorzugt ist das Getriebe jedoch als selbsthemmendes Getriebe ausgelegt. Darunter ist zu verstehen, dass zwar mit Hilfe des Stellantriebs die zweite Eingangswelle angetrieben werden kann, eine Drehbewegung der ersten Eingangswelle jedoch nicht auf den Stellantrieb übertragen wird. Auf diese Weise wird erreicht, dass der Stellantrieb nicht durch die Drehbewegung der ersten Eingangswelle in Drehbewegung versetzt wird, ohne dass er bestromt, also mit elektrischem Strom beaufschlagt, wird.

Zusätzlich oder alternativ kann es vorgesehen sein, dass die erste Eingangswelle ein Kettenrad eines Kettengetriebes zur Herstellung einer Wirkverbindung mit der Kurbelwelle aufweist. Das Kettenrad ist also von der ersten Eingangswelle ausgebildet oder auf diese angeordnet und drehmomentübertragend an ihr befestigt. Das Kettenrad ist Bestandteil des Kettengetriebes und dient der Aufnahme einer Kette, über welche eine Wirkverbindung zu der Kurbelwelle hergestellt ist.

Die Erfindung betrifft weiterhin ein Verfahren zum Betreiben einer Koppeleinrichtung, insbesondere gemäß der vorstehenden Ausführungen, wobei die Koppeleinrichtung zum Herstellen einer Wirkverbindung zwischen einer Nockenwelle einer Brennkraftmaschine und einer Kurbelwelle der Brennkraftmaschine und zum Verstellen der Phasenlage der Nockenwelle gegenüber der Phasenlage der Kurbelwelle vorgesehen ist und über eine von der Kurbelwelle antreibbare erste Eingangswelle, eine von einem elektrischen Stellantrieb antreibbare zweite Eingangswelle und eine mit der Nockenwelle wirkverbundene Ausgangswelle verfügt. Dabei ist vorgesehen, dass die zweite Eingangswelle und die Ausgangswelle über wenigstens ein an der ersten Eingangswelle exzentrisch und drehbeweglich gelagertes Drehmomentübertragungselement miteinander gekoppelt werden und der Stellantrieb nur zum Verstellen der Phasenlage betrieben wird. Hinsichtlich der Ausgestaltung der Koppeleinrichtung wird auf die vorstehenden Ausführungen verwiesen. Besonders vorteilhaft ist die Möglichkeit, den Stellantrieb der Koppeleinrichtung ausschließlich bei einem Verstellen der Phasenlage zu betreiben.

Auf diese Weise kann der Stellantrieb vergleichsweise klein dimensioniert und zugleich die Lebensdauer der Kuppeleinrichtung zu erhöht werden.

Die Erfindung betrifft schließlich einen Ventiltrieb einer Brennkraftmaschine mit mindestens einer Nockenwelle, einer Kurbelwelle und einer Koppeleinrichtung zur Herstellung einer Wirkverbindung zwischen der Nockenwelle und der Kurbelwelle und zur Verstellung der Phasenlage der Nockenwelle gegenüber der Phasenlage der Kurbelwelle, insbesondere einer Koppeleinrichtung gemäß den vorstehenden Ausführungen, wobei die Koppeleinrichtung über eine von der Kurbelwelle angetriebene erste Eingangswelle, eine von einem elektrischen Stellantrieb angetriebene zweite Eingangswelle und eine mit der Nockenwelle wirkverbundene Ausgangswelle verfügt. Dabei ist vorgesehen, dass die zweite Eingangswelle und die Ausgangswelle über wenigstens ein an der ersten Eingangswelle exzentrisch und drehbeweglich gelagertes Drehmomentübertragungselement miteinander gekoppelt sind. Die erste Eingangswelle ist also mit der Kurbelwelle wirkverbunden, während die zweite Eingangswelle mit dem elektrischen Stellantrieb wirkverbunden ist. Entsprechend wird die erste Eingangswelle von der Kurbelwelle angetrieben und die zweite Eingangswelle von dem elektrischen Stellantrieb. Zur Übertragung der Drehbewegung der ersten Eingangswelle und/oder der zweiten Eingangswelle auf die Nockenwellen ist die Ausgangswelle vorgesehen, welche mit der Nockenwelle wirkverbunden ist. Auch hier sei zur Ausgestaltung der Koppeleinrichtung auf die vorstehenden Ausführungen verwiesen.

Die Erfindung wird nachfolgend anhand der in der Zeichnung dargestellten Ausführungsbeispiele näher erläutert, ohne dass eine Beschränkung der Erfindung erfolgt. Dabei zeigen:

Figur 1     einen schematischen Längsschnitt durch eine Koppeleinrichtung zur Herstellung einer Wirkverbindung zwischen einer Nockenwelle und einer Kurbelwelle und zur Verstellung der Phasenlage der Nockenwelle, und

Figur 2     eine schematische Seitenansicht der aus der Figur 1 bekannten Koppeleinrichtung.

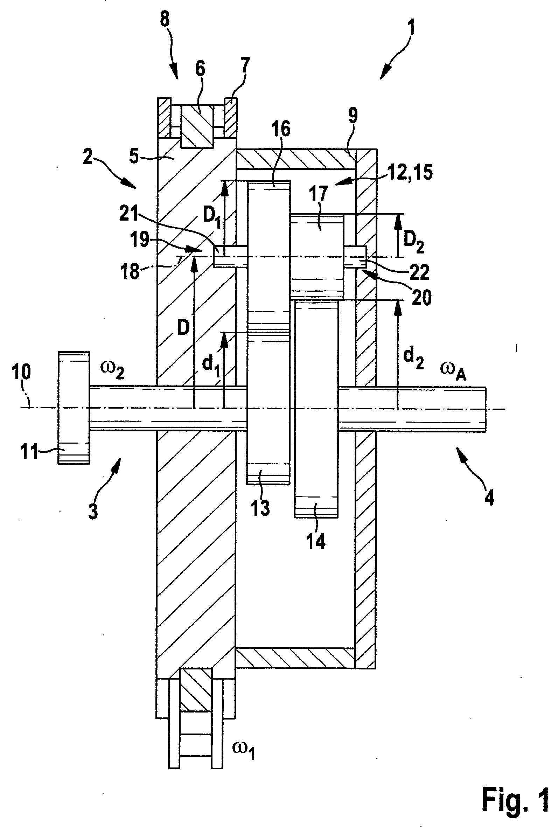

Die Figur 1 zeigt eine schematische Darstellung eines Längsschnitts einer Koppeleinrichtung 1, wie sie beispielsweise in einem Ventiltrieb einer Brennkraftmaschine (hier nicht dargestellt) vorgesehen ist. Die Brennkraftmaschine verfügt über eine Kurbelwelle und wenigstens eine Nockenwelle. Die Nockenwelle ist dem Ventiltrieb zugeordnet, welche auch die Koppeleinrichtung 1 aufweist. Mit Hilfe der Koppeleinrichtung 1 wird zum einen eine Wirkverbindung zwischen der Nockenwelle und der Kurbelwelle hergestellt und zum anderen eine Verstellung der Phasenlage der Nockenwelle gegenüber der Phasenlage der Kurbelwelle realisiert. Dem Ventiltrieb können mehrere Nockenwellen zugeordnet sein, wobei vorzugsweise jede Nockenwelle über eine Koppeleinrichtung 1 verfügt. Eine der Nockenwellen ist dann beispielsweise wenigstens einem Einlassventil der Brennkraftmaschine und die andere der Nockenwellen wenigstens einem Auslassventil der Brennkraftmaschine zugeordnet.

Die Koppeleinrichtung 1 verfügt über eine erste Eingangswelle 2, eine zweite Eingangswelle 3 und eine Ausgangswelle 4. Die erste Eingangswelle 2 ist mit der Kurbelwelle wirkverbunden. Zu diesem Zweck weist sie beispielsweise ein Kettenrad 5 auf, welches über mehrere Zähne 6 eine formschlüssige Verbindung zu einer Kette 7 eines Kettengetriebes 8 herstellt. Die Kette 7 führt zu einem weiteren, hier nicht dargestellten Kettenrad, welches mit der Kurbelwelle der Brennkraftmaschine wirkverbunden ist. An das Kettenrad 5 schließt sich ein Lagerkäfig 9 an, der sich ausgehend von dem Kettenrad 5 bezüglich einer Drehachse 10 in axialer Richtung erstreckt. Die Drehachse 10 stellt eine gemeinsame Drehachse der ersten Eingangswelle 2, der zweiten Eingangswelle 3 und der Ausgangswelle 4 dar. Die einzelnen Drehachsen dieser Wellen fallen also in der gemeinsamen Drehachse 10 zusammen. In dem hier dargestellten Ausführungsbeispiel ist das Kettenrad 5 der ersten Eingangswelle 2 auf der zweiten Eingangswelle 3 und der Lagerkäfig 9 auf der Ausgangswelle 4 drehbeweglich gelagert. Dabei ist der Lagerkäfig 9 drehfest mit dem Kettenrad 5 verbunden. Bei einer Drehbewegung des Kettenrads 5 beziehungsweise der ersten Eingangswelle 2 beschreibt also auch der Lagerkäfig 9 eine Drehbewegung um die gemeinsame Drehachse 10.

Die zweite Eingangswelle 3 ist mittels eines hier lediglich angedeuteten elektrischen Stellantriebs 11 antreibbar. Zwischen dem Stellantrieb 11 und der zweiten Eingangswelle 3 kann ein hier nicht dargestelltes Getriebe vorliegen, welches besonders bevorzugt selbsthemmend ausgebildet ist. Das bedeutet, dass eine Drehbewegung des Stellantriebs 11 in eine Drehbewegung der zweiten Eingangswelle 3 umgesetzt wird, umgekehrt jedoch eine Drehbewegung der ersten Eingangswelle 2 keine Drehbewegung des (stillstehenden) Stellantriebs 11 hervorruft. Die Ausgangswelle 4 ist bevorzugt unmittelbar mit der Nockenwelle verbunden beziehungsweise von einem Bereich der Nockenwelle ausgebildet. Die zweite Eingangswelle 3 und die Ausgangswelle 4 sind nun mittels eines an der ersten Eingangswelle 2 exzentrisch und drehbeweglich gelagertes Drehmomentübertragungselement 12 miteinander gekoppelt. Zu diesem Zweck weist die erste Eingangswelle 2 ein Eingangsdrehmomentübertragungsrad 13 und die Ausgangswelle 4 ein Ausgangsdrehmomentübertragungsrad 14 auf. Beide sind als Zahnräder ausgebildet, weisen also eine hier nicht dargestellte Außenverzahnung auf. Es wird deutlich, dass der Lagerkäfig 9 sowohl das Drehmomentübertragungselement 12 als auch das Eingangsdrehmomentübertragungsrad 13 und das Ausgangsdrehmomentübertragungsrad 14 vollständig einschließt.

Das Drehmomentübertragungselement 12 liegt hier als Koppelrad 15 vor. Es weist einen ersten Bereich 16 und einen zweiten Bereich 17 auf, wobei der erste Bereich 16 mit dem Eingangsdrehmomentübertragungsrad 13 und der zweite Bereich 17 mit dem Ausgangsdrehmomentübertragungsrad 14 zusammenwirkt. Das bedeutet, dass in den Bereichen 16 und 17 des Koppelrads 15 ebenfalls Außenverzahnungen vorgesehen sind, welche mit den Außenverzahnungen des Eingangsdrehmomentübertragungsrads 13 und des Ausgangsdrehmomentübertragungsrads 14 in Eingriff stehen. Das Eingangsdrehmomentübertragungsrad 13 weist einen Durchmesser $d_1$ und das Ausgangsdrehmomentübertragungsrad 14 einen zweiten Durchmesser $d_2$ auf. Diese beiden Durchmesser $d_1$ und $d_2$ können gleich sein, sind bevorzugt jedoch unterschiedlich. Insbesondere ist der zweite Durchmesser $d_2$ größer als der erste Durchmesser $d_1$. Der erste Bereich 16 des Koppelrads 15 weist einen ersten Komplementärdurchmesser $D_1$ auf.

Es ist nun darauf zu achten, dass die Summe aus $d_1/2 + D_1/2$ gleich der Summe aus $d_2/2 + D_2/2$ ist. Diese Summe wird bestimmt aus dem Abstand zwischen der gemeinsamen Drehachse 10 von den Eingangswellen 2 und 3 sowie von der Ausgangswelle 4 und einer Drehachse 18 des Drehmomentübertragungselements 12. Dieser Abstand wird in der Figur 1 als D bezeichnet. Es gilt mithin $D = d_1/2 + D_1/2 = d_2/2 + D_2/2$. Es wird deutlich, dass das Drehmomentübertragungselement 12 exzentrisch an der ersten Eingangswelle 2 gelagert ist, wobei die Drehachse 18 beabstandet parallel zu der gemeinsamen Drehachse 10 vorliegt. Zur Lagerung des Drehmomentübertragungselements 12 sind zwei Lager 19 und 20 vorgesehen, wobei das Lager 19 an dem Kettenrad 5 und das Lager 20 an dem Lagerkäfig 9 vorliegt. Das Drehmomentübertragungselement 12 weist zwei Zapfen 21 und 22 auf, wobei der Zapfen 21 in dem Lager 19 und der Zapfen 22 in dem Lager 20 einsitzt. In der hier dargestellten Ausführungsform ist lediglich ein einziges Drehmomentübertragungselement 12 vorgesehen. Selbstverständlich kann es jedoch vorgesehen sein, dass mehrere, insbesondere zwei oder drei, Drehmomentübertragungselemente 12 vorliegen. Diese sind über den Umfang der ersten Eingangswelle 2 verteilt, insbesondere gleichmäßig verteilt, an dieser exzentrisch und drehbeweglich gelagert.

Bei dem Betreiben der Koppeleinrichtung 1 stellen sich an der ersten Eingangswelle 2 die Drehzahl $\omega_1$, an der zweiten Eingangswelle 3 die Drehzahl $\omega_2$ und an der Ausgangswelle die Drehzahl $\omega_A$ ein. Das Drehzahlverhältnis zwischen erster Eingangswelle 2, zweiter Eingangswelle 3 und Ausgangswelle 4 lässt sich mit folgender Gleichung beschreiben:

$$\omega_A = \omega_1\left(1 - \frac{d_1 D_2}{D_1 d_2}\right) + \omega_2 \frac{d_1 D_2}{D_1 d_2}.$$

Gilt nun beispielsweise $d_1 = D_1$ und $d_2 = 2D_2$, so ergibt sich das Verhältnis zu

$$\omega_A = \frac{1}{2}\omega_1 + \frac{1}{2}\omega_2.$$

Auf diese Weise lässt sich mit der Koppeleinrichtung 1 auch eine Drehzahlumsetzung zwischen der Kurbelwelle und Nockenwelle 4 erreichen. In dem vorliegenden Fall dreht sich bei nicht betätigtem Stellantrieb 11, also bei $\omega_2 = 0$ 1/s, die Ausgangswelle 4 mit der halben Drehzahl der ersten Eingangswelle 2 beziehungsweise der halben Drehzahl der Kurbelwelle. Es gilt also

$$\omega_A = \frac{1}{2}\omega_1 \text{ für } \omega_2 = 0\frac{1}{s}$$

Entsprechend muss die Drehzahlumsetzung nicht mit Hilfe des Kettengetriebes 8 erreicht werden, so dass der Durchmesser beziehungsweise die Anzahl der Zähne von Kettenrad und weiterem Kettenrad gleich sein können.

Durch Betätigen des Stellantriebs 11, also für $\omega_2 <> 0$ 1/s kann nun die Phasenlage der Nockenwelle gegenüber der Phasenlage der Kurbelwelle verstellt werden. Zu diesem Zweck muss zum Erreichen einer Differenz der Phasenlagen von $\varphi$ bei den vorstehend beschriebenen Verhältnissen die zweite Eingangswelle 3 um den Winkel $2\varphi$ verdreht werden. Insbesondere wenn der Stellantrieb 11 über ein selbsthemmendes Getriebe mit der zweiten Eingangswelle 3 wirkverbunden ist, muss der Stellantrieb 11 lediglich zum Verstellen der Phasenlage betätigt werden. Ein Betätigen beziehungsweise Betreiben des Stellantriebs 11 während keine Verstellung der Phasenlage vorgesehen ist, ist somit nicht notwendig. In dieser Zeit gilt also $\omega_2 = 0$ 1/s. Auf diese Weise kann zum einen der Stellantrieb 1 vergleichsweise klein dimensioniert und zum anderen seine Lebensdauer verlängert werden.

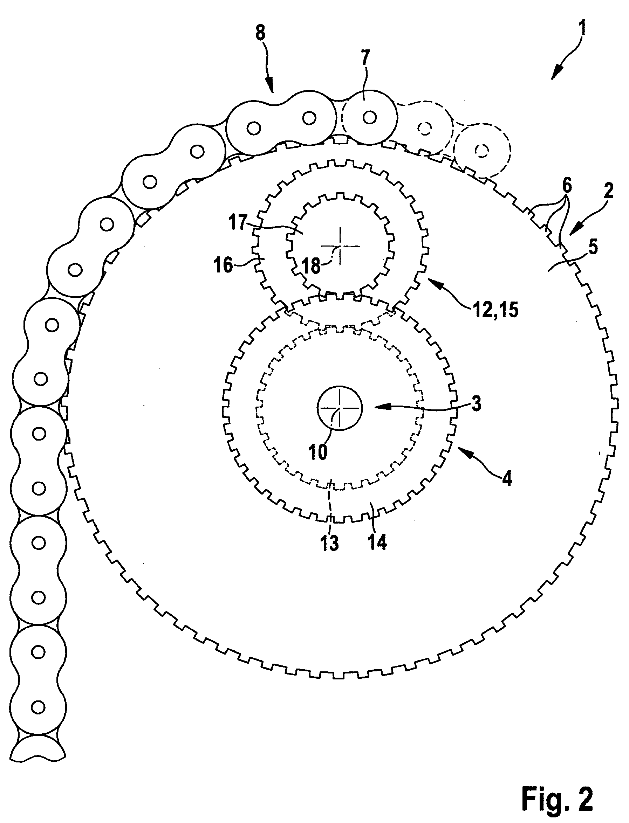

Die Figur 2 zeigt eine Seitenansicht der Koppeleinrichtung 1. Der Aufbau entspricht dem anhand der Figur 1 beschriebenen, sodass insoweit auf die vorstehenden Ausführungen verwiesen wird.

## Patentansprüche

1. Koppeleinrichtung (1) zur Herstellung einer Wirkverbindung zwischen einer Nockenwelle einer Brennkraftmaschine und einer Kurbelwelle der Brennkraftmaschine und zur Verstellung der Phasenlage der Nockenwelle gegenüber der Phasenlage der Kurbelwelle, wobei die Koppeleinrichtung (1) über eine von der Kurbelwelle antreibbare erste Eingangswelle (2), eine von einem elektrischen Stellantrieb (11) antreibbare zweite Eingangswelle (3) und eine mit der Nockenwelle wirkverbundene Ausgangswelle (4) verfügt, wobei die zweite Eingangswelle (3) und die Ausgangswelle (4) über wenigstens ein an der ersten Eingangswelle (2) exzentrisch und drehbeweglich gelagertes Drehmomentübertragungselement (12) miteinander gekoppelt sind und die erste Eingangswelle (2) einen Lagerkäfig (9) zur drehbeweglichen Lagerung des Drehmomentübertragungselements (12) aufweist, **dadurch gekennzeichnet, dass** sich die erste Eingangswelle (2) aus einem Grundkörper und dem Lagerkäfig (9) zusammensetzt, wobei der Grundkörper auf der zweiten Eingangswelle (3) oder der Ausgangswelle (4) und der Lagerkäfig (9) auf der jeweils anderen Welle (4,3) drehbeweglich gelagert ist, und wobei der Lagerkäfig (9) das Drehmomentübertragungselement (12), das Eingangsdrehmomentübertragungsrad (13) und das Ausgangsdrehmomentübertragungsrad (14) vollständig einschließt.

2. Koppeleinrichtung nach Anspruch 1, **dadurch gekennzeichnet, dass** die erste Eingangswelle (2), die zweite Eingangswelle (3) und die Ausgangswelle (4) koaxial zueinander angeordnet sind.

3. Koppeleinrichtung nach einem der vorhergehenden Ansprüche, **dadurch gekennzeichnet, dass** die zweite Eingangswelle (3) ein Eingangsdrehmomentübertragungsrad (13) mit einem ersten Durchmesser ($d_1$) und die Ausgangswelle (4) ein Ausgangsdrehmomentübertragungsrad (14) mit einem zwei-

ten Durchmesser (d$_2$) aufweist, wobei das Eingangsdrehmomentübertragungsrad (13) und das Ausgangsdrehmomentübertragungsrad (14) über das als Koppelrad (15) ausgebildete Drehmomentübertragungselement (12) miteinander wirkverbunden sind.

4. Koppeleinrichtung nach einem der vorhergehenden Ansprüche, **dadurch gekennzeichnet, dass** das Eingangsdrehmomentübertragungsrad (13), das Ausgangsdrehmomentübertragungsrad (14) und das Koppelrad (15) als Zahnräder ausgebildet sind.

5. Koppeleinrichtung nach einem der vorhergehenden Ansprüche, **dadurch gekennzeichnet, dass** das Koppelrad (15) einen ersten, mit dem Eingangsdrehmomentübertragungsrad (13) wirkverbundenen Bereich (16) mit einem ersten Komplementärdurchmesser (D$_1$) und einen zweiten, mit dem Ausgangsdrehmomentübertragungsrad (14) wirkverbundenen Bereich (17) mit einem zweiten Komplementärdurchmesser (D$_2$) aufweist.

6. Koppeleinrichtung nach einem der vorhergehenden Ansprüche, **dadurch gekennzeichnet, dass** das Drehmomentübertragungselement (12) eine zu den Drehachsen (10) der ersten Eingangswelle (2), der zweiten Eingangswelle (3) und der Ausgangswelle (4) parallele Drehachse (18) aufweist.

7. Koppeleinrichtung nach einem der vorhergehenden Ansprüche, **dadurch gekennzeichnet, dass** der Stellantrieb (11) mit der zweiten Eingangswelle (3) über ein, insbesondere selbsthemmendes Getriebe wirkverbunden ist.

8. Verfahren zum Betreiben einer Koppeleinrichtung (1), insbesondere nach einem oder mehreren der vorhergehenden Ansprüche, wobei die Koppeleinrichtung (1) zum Herstellen einer Wirkverbindung zwischen einer Nockenwelle einer Brennkraftmaschine und einer Kurbelwelle der Brennkraftmaschine und zum Verstellen der Phasenlage der Nockenwelle gegenüber der Phasenlage der Kurbelwelle vorgesehen ist und über eine von der Kurbelwelle antreibbare erste Eingangswelle (2), eine von einem elektrischen Stellantrieb (11) antreibbare zweite Eingangswelle (3) und eine mit der Nockenwelle wirkverbundene Ausgangswelle (4) verfügt, wobei die zweite Eingangswelle (3) und die Ausgangswelle (4) über wenigstens ein an der ersten Eingangswelle (2) exzentrisch und drehbeweglich gelagertes Drehmomentübertragungselement (12) miteinander gekoppelt werden und der Stellantrieb (11) nur zum Verstellen der Phasenlage betrieben wird und die erste Eingangswelle (2) einen Lagerkäfig (9) zur drehbeweglichen Lagerung des Drehmomentübertragungselements (12) aufweist, **dadurch gekenn-**

**zeichnet, dass** sich die erste Eingangswelle (2) aus einem Grundkörper und dem Lagerkäfig (9) zusammensetzt, wobei der Grundkörper auf der zweiten Eingangswelle (3) oder der Ausgangswelle (4) und der Lagerkäfig (9) auf der jeweils anderen Welle (4,3) drehbeweglich gelagert ist, und wobei der Lagerkäfig (9) das Drehmomentübertragungselement (12), das Eingangsdrehmomentübertragungsrad (13) und das Ausgangsdrehmomentübertragungsrad (14) vollständig einschließt.

9. Ventiltrieb einer Brennkraftmaschine mit mindestens einer Nockenwelle, einer Kurbelwelle und einer Koppeleinrichtung (1) zur Herstellung einer Wirkverbindung zwischen der Nockenwelle und der Kurbelwelle und zur Verstellung der Phasenlage der Nockenwelle gegenüber der Phasenlage der Kurbelwelle, insbesondere einer Koppeleinrichtung (1) nach einem oder mehreren der vorhergehenden Ansprüche, wobei die Koppeleinrichtung (1) über eine von der Kurbelwelle angetriebene erste Eingangswelle (2), eine von einem elektrischen Stellantrieb (11) angetriebene zweite Eingangswelle (3) und eine mit der Nockenwelle wirkverbundene Ausgangswelle (4) verfügt, wobei die zweite Eingangswelle (3) und die Ausgangswelle (4) über wenigstens ein an der ersten Eingangswelle (2) exzentrisch und drehbeweglich gelagertes Drehmomentübertragungselement (12) miteinander gekoppelt sind und die erste Eingangswelle (2) einen Lagerkäfig (9) zur drehbeweglichen Lagerung des Drehmomentübertragungselements (12) aufweist, **dadurch gekennzeichnet, dass** sich die erste Eingangswelle (2) aus einem Grundkörper und dem Lagerkäfig (9) zusammensetzt, wobei der Grundkörper auf der zweiten Eingangswelle (3) oder der Ausgangswelle (4) und der Lagerkäfig (9) auf der jeweils anderen Welle (4,3) drehbeweglich gelagert ist, und wobei der Lagerkäfig (9) das Drehmomentübertragungselement (12), das Eingangsdrehmomentübertragungsrad (13) und das Ausgangsdrehmomentübertragungsrad (14) vollständig einschließt.

**Claims**

1. Coupling device (1) for producing an operative connection between a camshaft of an internal combustion engine and a crankshaft of the internal combustion engine and for adjusting the phase position of the camshaft with respect to the phase position of the crankshaft, the coupling device (1) having a first input shaft (2) which can be driven by the crankshaft, a second input shaft (3) which can be driven by an electric actuating drive (11), and an output shaft (4) which is operatively connected to the camshaft, the second input shaft (3) and the output shaft (4) being coupled to one another via at least one torque transmission element (12) which is mounted eccentrically and rotationally movably on the first input shaft (2), and the first input shaft (2) having a bearing cage (9) for mounting the torque transmission element (12) in a rotationally movable manner, **characterized in that** the first input shaft (2) is assembled from a main body and the bearing cage (9), the main body being mounted on the second input shaft (3) or the output shaft (4) in a rotationally movable manner, and the bearing cage (9) being mounted on the respectively other shaft (4, 3) in a rotationally movable manner, and the bearing cage (9) completely enclosing the torque transmission element (12), the input torque transmission wheel (13) and the output torque transmission wheel (14).

2. Coupling device according to Claim 1, **characterized in that** the first input shaft (2), the second input shaft (3) and the output shaft (4) are arranged coaxially with respect to one another.

3. Coupling device according to either of the preceding claims, **characterized in that** the second input shaft (3) has an input torque transmission wheel (13) with a first diameter ($d_1$), and the output shaft (4) has an output torque transmission wheel (14) with a second diameter ($d_2$), the input torque transmission wheel (13) and the output torque transmission wheel (14) being operatively connected to one another via the torque transmission element (12) which is configured as a coupling wheel (15).

4. Coupling device according to one of the preceding claims, **characterized in that** the input torque transmission wheel (13), the output torque transmission wheel (14) and the coupling wheel (15) are configured as gearwheels.

5. Coupling device according to one of the preceding claims, **characterized in that** the coupling wheel (15) has a first region (16) with a first complementary diameter ($D_1$) which is operatively connected to the input torque transmission wheel (13) and a second region (17) with a second complementary diameter ($D_2$) which is operatively connected to the output torque transmission wheel (14).

6. Coupling device according to one of the preceding claims, **characterized in that** the torque transmission element (12) has a rotational axis (18) which is parallel to the rotational axes (10) of the first input shaft (2), of the second input shaft (3) and of the output shaft (4).

7. Coupling device according to one of the preceding claims, **characterized in that** the actuating drive (11) is operatively connected to the second input shaft (3) via a gear mechanism which is, in particular, self-locking.

8. Method for operating a coupling device (1), in particular according to one or more of the preceding claims, the coupling device (1) being provided for producing an operative connection between a camshaft of an internal combustion engine and a crankshaft of the internal combustion engine and for adjusting the phase position of the camshaft with respect to the phase position of the crankshaft, and having a first input shaft (2) which can be driven by the crankshaft, a second input shaft (3) which can be driven by an electric actuating drive (11), and an output shaft (4) which is operatively connected to the camshaft, the second input shaft (3) and the output shaft (4) being coupled to one another via at least one torque transmission element (12) which is mounted eccentrically and rotationally movably on the first input shaft (2), and the actuating drive (11) being operated only for adjusting the phase position, and the first input shaft (2) having a bearing cage (9) for mounting the torque transmission element (12) in a rotationally movable manner, **characterized in that** the first input shaft (2) is assembled from a main body and the bearing cage (9), the main body being mounted on the second input shaft (3) or the output shaft (4) in a rotationally movable manner, and the bearing cage (9) being mounted on the respectively other shaft (4, 3) in a rotationally movable manner, and the bearing cage (9) completely enclosing the torque transmission element (12), the input torque transmission wheel (13) and the output torque transmission wheel (14).

9. Valve train of an internal combustion engine having at least one camshaft, a crankshaft and a coupling device (1) for producing an operative connection between the camshaft and the crankshaft and for adjusting the phase position of the camshaft with respect to the phase position of the crankshaft, in particular a coupling device (1) according to one or more of the preceding claims, the coupling device (1) having a first input shaft (2) which is driven by the crankshaft, a second input shaft (3) which is driven by an electric actuating drive (11), and an output shaft (4) which is operatively connected to the camshaft, the second input shaft (3) and the output shaft (4) being coupled to one another via at least one torque transmission element (12) which is mounted eccentrically and rotationally movably on the first input shaft (2), and the first input shaft (2) having a bearing cage (9) for mounting the torque transmission element (12) in a rotationally movable manner, **characterized in that** the first input shaft (2) is assembled from a main body and the bearing cage (9), the main body being mounted on the second input shaft (3) or the output shaft (4) in a rotationally movable manner, and the bearing cage (9) being mounted on the respectively other shaft (4, 3) in a rotationally movable manner, and the bearing cage (9) completely enclosing the torque transmission element (12), the input torque transmission wheel (13) and the output torque transmission wheel (14).

**Revendications**

1. Dispositif de couplage (1) destiné à établir une liaison fonctionnelle entre un arbre à cames d'un moteur à combustion interne et un vilebrequin du moteur à combustion interne et à régler la position de phase de l'arbre à cames par rapport à la position de phase du vilebrequin, le dispositif de couplage (1) disposant d'un premier arbre d'entrée (2) pouvant être entraîné par le vilebrequin, d'un deuxième arbre d'entrée (3) pouvant être entraîné par un entraînement de réglage électrique (11), et d'un arbre de sortie (4) en liaison fonctionnelle avec l'arbre à cames, le deuxième arbre d'entrée (3) et l'arbre de sortie (4) étant accouplés l'un à l'autre par le biais d'au moins un élément de transfert de couple (12) supporté de manière excentrique et mobile en rotation sur le premier arbre d'entrée (2), et le premier arbre d'entrée (2) présentant une cage de palier (9) pour le support sur palier mobile en rotation de l'élément de transfert de couple (12), **caractérisé en ce que** le premier arbre d'entrée (2) se compose d'un corps de base et de la cage de palier (9), le corps de base étant supporté de manière mobile en rotation sur le deuxième arbre d'entrée (3) ou sur l'arbre de sortie (4) et la cage de palier (9) étant supportée de manière mobile en rotation sur l'autre arbre respectif (4, 3), et la cage de palier (9) entourant complètement l'élément de transfert de couple (12), la roue de transfert de couple d'entrée (13) et la roue de transfert de couple de sortie (14).

2. Dispositif de couplage selon la revendication 1, **caractérisé en ce que** le premier arbre d'entrée (2), le deuxième arbre d'entrée (3) et l'arbre de sortie (4) sont disposés coaxialement l'un par rapport à l'autre.

3. Dispositif de couplage selon l'une quelconque des revendications précédentes, **caractérisé en ce que** le deuxième arbre d'entrée (3) présente une roue de transfert de couple d'entrée (13) d'un premier diamètre ($d_1$) et l'arbre de sortie (4) présente une roue de transfert de couple de sortie (14) d'un deuxième diamètre ($d_2$), la roue de transfert de couple d'entrée (13) et la roue de transfert de couple de sortie (14) étant en liaison fonctionnelle l'une avec l'autre par le biais de l'élément de transfert de couple (12) réalisé sous forme de roue d'accouplement (15).

4. Dispositif de couplage selon l'une quelconque des revendications précédentes, **caractérisé en ce que** la roue de transfert de couple d'entrée (13), la roue de transfert de couple de sortie (14) et la roue d'accouplement (15) sont réalisées sous forme de roues dentées.

5. Dispositif de couplage selon l'une quelconque des revendications précédentes, **caractérisé en ce que** la roue d'accouplement (15) présente une première région (16) en liaison fonctionnelle avec la roue de transfert de couple d'entrée (13), ayant un premier diamètre complémentaire ($D_1$), et une deuxième région (17) en liaison fonctionnelle avec la roue de transfert de couple de sortie (14), ayant un deuxième diamètre complémentaire ($D_2$).

6. Dispositif de couplage selon l'une quelconque des revendications précédentes, **caractérisé en ce que** l'élément de transfert de couple (12) présente un axe de rotation (18) parallèle aux axes de rotation (10) du premier arbre d'entrée (2), du deuxième arbre d'entrée (3) et de l'arbre de sortie (4).

7. Dispositif de couplage selon l'une quelconque des revendications précédentes, **caractérisé en ce que** l'entraînement de réglage (11) est en liaison fonctionnelle avec le deuxième arbre d'entrée (3) par le biais d'une transmission notamment autobloquante.

8. Procédé pour faire fonctionner un dispositif de couplage (1), en particulier selon l'une quelconque ou plusieurs des revendications précédentes, dans lequel le dispositif de couplage (1) est prévu pour établir une liaison fonctionnelle entre un arbre à cames d'un moteur à combustion interne et un vilebrequin du moteur à combustion interne, et pour régler la position de phase de l'arbre à cames par rapport à la position de phase du vilebrequin, et dispose d'un premier arbre d'entrée (2) pouvant être entraîné par le vilebrequin, d'un deuxième arbre d'entrée (3) pouvant être entraîné par un entraînement de réglage électrique (11), et d'un arbre de sortie (4) en liaison fonctionnelle avec l'arbre à cames, le deuxième arbre d'entrée (3) et l'arbre de sortie (4) étant accouplés l'un à l'autre par le biais d'au moins un élément de transfert de couple (12) supporté de manière excentrique et mobile en rotation sur le premier arbre d'entrée (2), et l'entraînement de réglage (11) n'étant commandé que pour le réglage de la position de phase et le premier arbre d'entrée (2) présentant une cage de palier (9) pour le support sur palier mobile en rotation de l'élément de transfert de couple (12), **caractérisé en ce que** le premier arbre d'entrée (2) se compose d'un corps de base et de la cage de palier (9), le corps de base étant supporté de manière mobile en rotation sur le deuxième arbre d'entrée (3) ou sur l'arbre de sortie (4) et la cage de palier (9) étant supportée de manière mobile en rotation sur l'autre arbre respectif (4, 3), et la cage de palier (9) entourant complètement l'élément de transfert de couple (12), la roue de transfert de couple d'entrée (13) et la roue de transfert de couple de sortie (14).

9. Commande de soupapes d'un moteur à combustion interne comprenant au moins un arbre à cames, un vilebrequin et un dispositif de couplage (1) destiné à établir une liaison fonctionnelle entre l'arbre à cames et le vilebrequin et à régler la position de phase de l'arbre à cames par rapport à la position de phase du vilebrequin, en particulier un dispositif de couplage (1) selon l'une quelconque ou plusieurs des revendications précédentes, le dispositif de couplage (1) disposant d'un premier arbre d'entrée (2) pouvant être entraîné par le vilebrequin, d'un deuxième arbre d'entrée (3) pouvant être entraîné par un entraînement de réglage électrique (11), et d'un arbre de sortie (4) en liaison fonctionnelle avec l'arbre à cames, le deuxième arbre d'entrée (3) et l'arbre de sortie (4) étant accouplés l'un à l'autre par le biais d'au moins un élément de transfert de couple (12) supporté de manière excentrique et mobile en rotation sur le premier arbre d'entrée (2), et le premier arbre d'entrée (2) présentant une cage de palier (9) pour le support sur palier mobile en rotation de l'élément de transfert de couple (12), **caractérisée en ce que** le premier arbre d'entrée (2) se compose d'un corps de base et de la cage de palier (9), le corps de base étant' supporté de manière mobile en rotation sur le deuxième arbre d'entrée (3) ou sur l'arbre de sortie (4) et la cage de palier (9) étant supportée de manière mobile en rotation sur l'autre arbre respectif (4, 3), et la cage de palier (9) entourant complètement l'élément de transfert de couple (12), la roue de transfert de couple d'entrée (13) et la roue de transfert de couple de sortie (14).

**Fig. 1**

Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0396280 A1
- DE 102005053119 A1